# EUROPEAN PATENT APPLICATION

(11) **EP 2 679 606 A1**
(43) Date of publication of application: **01.01.2014**
(21) Application number: 11859094.2
(22) Date of filing: 21.02.2011
(51) Int. Cl.: C08F 2/18, C08F 14/06

(54) **DISPERSANT FOR SUSPENSION POLYMERIZATION, VINYL CHLORIDE RESIN AND METHOD FOR PRODUCING SAME**

(71) Applicant: Denki Kagaku Kogyo Kabushiki Kaisha, Tokyo 103-8338 (JP)
(72) Inventor: YOSHII Shigeharu, Itoigawa-city Niigata 949-0393 (JP)
(74) Representative: Godemeyer Blum Lenze - werkpatent
(86) International application number: PCT/JP2011/053729
(87) International publication number: WO 2012/114441

(57) **Abstract**

Provided are a dispersant for suspension polymerization that is superior in basic properties as primary dispersant: i.e., of giving a vinyl chloride resin with lower fish eye-forming tendency and higher bulk specific density, gives low aqueous solution viscosity and is superior in processability during solubilization, a vinyl chloride resin prepared by using the same and a production method for the resin.

Used is a dispersant for suspension polymerization, comprising a modified polyvinyl alcohol containing constituent units carrying carbonyl groups such as alkyl maleates and having a saponification value of 75 mol % or more and less than 90 mol %, an absorbance at a wavelength of 280 nm, as determined as 0.2 mass % aqueous or mixed water and methanol solution, of 0.5 to 2.5 and a viscosity, as determined by the method specified by JIS K 6726, of 4 mPa·s or more and less than 30 mPa·s.

## Description

### Technical Field

The present invention relates to a dispersant for suspension polymerization used in production of vinyl chloride resins by suspension polymerization, a vinyl chloride resin produced by using the dispersant, and a method for producing the same. More specifically, it relates to a technology to improve the properties of a dispersant for suspension polymerization containing polyvinyl alcohol.

### Background Art

Vinyl chloride resins are produced generally by a suspension polymerization method of dispersing vinyl chloride monomer, a polymerization initiator, a dispersant and others in an aqueous medium and carrying out polymerization in the dispersion. The dispersants used then include so-called "primary dispersants" that are added for stabilization of the vinyl chloride monomer dispersion and thus adjustment of the particle diameter of the vinyl chloride resin produced and so-called "secondary dispersants" that are added for increase of the porosity of the vinyl chloride resin particles produced.

Traditionally, polyvinyl alcohol (PVA), hydroxypropylmethylcellulose and the like have been used as the "primary dispersants" (see Patent Documents 1 to 3), while PVAs lower in saponification value than the primary dispersants above have been used as the "secondary dispersants" (see Patent Document 4). For example in the method of producing a vinyl chloride-based polymer described in Patent Document 4, a PVA having a saponification value of 75 to 85 mol % was used as the primary dispersant and a PVA having a saponification value of 20 to 57 mol % was used as the secondary dispersant.

The applicant proposed mainly as the primary dispersant a dispersant for polymerization comprising a modified PVA containing alkyl maleate bonding units and having a viscosity, as determined by the method specified by JIS K6726, of 30 mPa·s or more and less than 400 mPa·s and a saponification value of 75 mol % or more and less than 90 mol % (see Patent Document 5). A modified PVA containing bonding units derived from dimethyl maleate or maleic anhydride and having a saponification value of 20 to 60 mol % and an average polymerization degree of 100 to 1000 was also proposed mainly as the secondary dispersant (see Patent Document 6).

### Citation List

### Patent Literatures

[Patent Document 1] Japanese Unexamined Patent Application Publication No. 2002-3510
[Patent Document 2] Japanese Unexamined Patent Application Publication No. 2003-327607
[Patent Document 3] Japanese Unexamined Patent Application Publication No. 2003-238606
[Patent Document 4] Japanese Unexamined Patent Application Publication No. 2005-281680
[Patent Document 5] Japanese Unexamined Patent Application Publication No. 2009-108218
[Patent Document 6] Japanese Unexamined Patent Application Publication No. 2007-63369

### Summary of Invention

### Technical Problem

However, traditional technologies described above have the following problems: The "primary dispersant" used in production of vinyl chloride resins demands that it should cause less foaming when dissolved in water and give a final resin with smaller fish eye-forming tendency and high bulk specific density. All of the dispersants described in Patent Documents 1 to 4 have the problem that they do not satisfy these requirements.

In addition, the dispersants described in Patent Document 1 to 4 contains a combination of two or more polymers, because it is not possible to obtain a satisfactory vinyl chloride resin only with a partially saponified PVA. Thus, use of these dispersants unfavorably makes the solubilization procedure more complicated and, if HPMC, which is more expensive than PVA, is used, it also cause a problem of production cost being raised. In contrast, the dispersant described in Patent Document 5, which contains a PVA having double bonds introduced therein, gives vinyl chloride resins having higher bulk specific density.

On the other hand, recently, there is a demand for a dispersant for suspension polymerization that is readily soluble in water and causes less foaming for improvement of productivity. However, PVAs traditionally used as the "primary dispersants" often have high saponification value, form much foams when dissolved in water, as the aqueous solution has high viscosity, are dissolved slowly or deposited more on the internal wall of the solubilization tank. It is preferable to reduce the viscosity of the aqueous solution in order to overcome these problems, but simple reduction of the polymerization degree of PVA may impair the bulk specific density and the fish eye-forming tendency of the vinyl chloride resin.

Accordingly, an object of the present invention is to provide a dispersant for suspension polymerization that is superior in the basic properties of primary dispersant, i.e., that gives a vinyl chloride resin with smaller fish eye-forming tendency and high bulk specific density and a low-viscosity aqueous solution and is superior in processability during its solubilization, a vinyl chloride resin and the method for producing the same.

### Solution to Problem

The dispersant for suspension polymerization according to the present invention comprises a modified polyvinyl alcohol containing the constituent unit represented by the following Chemical Formula (1) and having a saponification value of 75 mol % or more and less than 90 mol %, an absorbance at a wavelength of 280 nm, as determined as 0.2 mass % aqueous or mixed water and methanol solution, of 0.5 to 2.5 and a viscosity, as determined by the method specified by JIS K 6726, of 4 mPa·s or more and less than 30 mPa·s.

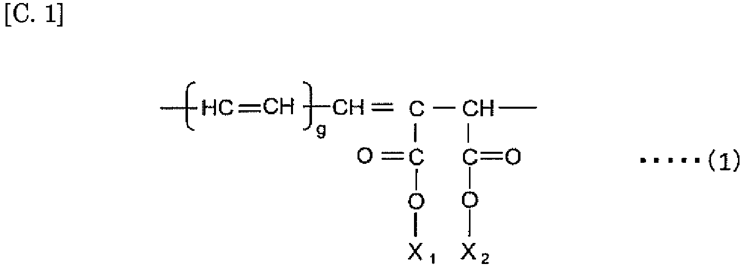

In Chemical Formula (1) above, X₁ and X₂ may be the same as or different from each other and represent an alkyl group having a carbon number of 1 to 12, a hydrogen atom or a metal atom, g represents an integer of 1 to 3.

In the present invention, because the dispersant contains as the principal component a modified polyvinyl alcohol containing a constituent unit represented by Chemical Formula (1) above and having a saponification value of 75 mol % or more and less than 90 mol % and an absorbance at a wavelength of 280 nm, as determined as 0.2 mass % aqueous or mixed water and methanol solution, of 0.5 to 2.5, the vinyl chloride resin obtained has smaller fish eye-forming tendency and the vinyl chloride resin powder has higher bulk specific density. In addition, the modified polyvinyl alcohol is also superior in processability during use, as its aqueous solution is less viscous.

In the dispersant for suspension polymerization, the absorbance at a wavelength of 325 nm, as determined as 0.2 mass % aqueous or mixed water and methanol solution of the modified polyvinyl alcohol at 20°C, may be for example 0.02 to 0.20.
Alternatively, the cloud point of the 4 mass % aqueous solution of the modified polyvinyl alcohol is preferably 50°C or higher.

The vinyl chloride resin according to the present invention is a vinyl chloride resin having a bulk specific density of 0.52g/cc or more, prepared by dispersing the dispersant for suspension polymerization described above and vinyl chloride monomer or a monomer mixture containing vinyl chloride monomer in water and suspension-polymerizing the dispersion.
The vinyl chloride resin according to the present invention, which has high bulk specific density, can be stored and transported efficiently and improves the processability at the processing sites.

The method for producing a vinyl chloride resin according to the present invention is a method for producing a vinyl chloride resin by dispersing vinyl chloride monomer or a monomer mixture containing vinyl chloride monomer in water and suspension-polymerizing the dispersion, wherein a dispersant for suspension polymerization comprising a modified polyvinyl alcohol containing constituent unit represented by the Chemical Formula (1) above and having a saponification value of 75 mol % or more and less than 90 mol %, an absorbance at a wavelength of 280 nm, as determined as 0.2 mass % aqueous or mixed water and methanol solution at 20°C, of 0.5 to 2.5, and a viscosity, as determined by the method specified by JIS K 6726, of 4 mPa·s or more and less than 30 mPa·s is used.
In the present invention, because a dispersant comprising as the principal component a modified polyvinyl alcohol containing a constituent unit represented by Chemical Formula (1) above and having an average saponification value of 75 mol % or more and less than 90 mol %, an absorbance at a wavelength of 280 nm, as determined as 0.2 mass % aqueous or mixed water and methanol solution at 20°C, of 0.5 to 2.5, and low viscosity is used, the vinyl chloride resin obtained is superior in processability during use, and has smaller fish eye-forming tendency and higher bulk specific density.
Also in the production method, the dispersant for polymerization may be added in such an amount that the amount of the modified polyvinyl alcohol is 0.03 to 0.10 mass % of the total amount of vinyl chloride monomer.

### Advantageous Effects of Invention

According to the present invention, because the dispersant contains a modified polyvinyl alcohol having high average saponification value and containing double bonds in a particular amount, it is possible to reduce the viscosity of the aqueous solution without affecting the fish eye-suppressing effect and bulk specific density-increasing efficiency as the primary dispersant and thus to provide a dispersant for suspension polymerization superior in processability during solubilization.

### Description of Preferred Embodiments

Hereinafter, favorable embodiments of the invention will be described in detail. It should be understood that the present invention is not limited by the embodiments described below.

### (First embodiment)

First, the dispersant for suspension polymerization in the first embodiment of the present invention will be described. The dispersant in the present embodiment is a dispersant used during production of vinyl chloride resins by suspension polymerization, which functions in the polymerization solution as the "primary dispersant" to stabilize the vinyl chloride monomer dispersion and adjust the particle diameter of the vinyl chloride resin produced.

Specifically, the dispersant in the present embodiment comprises a modified polyvinyl alcohol (PVA) containing a constituent unit represented by the following Chemical Formula (2) and having a saponification value of 75 mol % or more and less than 90 mol %, an absorbance at a wavelength of 280 nm, as determined as 0.2 mass % aqueous or mixed water and methanol solution at 20°C, of 0.5 to 2.5, and a viscosity, as determined by the method specified by JIS K 6726, (viscosity of aqueous solution at a concentration of 4 mass % at 20°C. hereinafter referred to also as aqueous solution viscosity), of 4 mPa·s or more and less than 30 mPa·s.

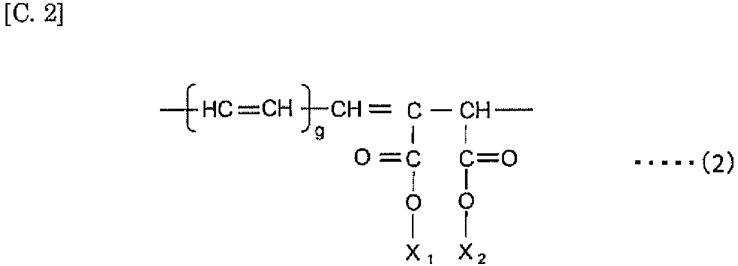

In Chemical Formula (2) above, X₁ and X₂ may be the same as or different from each other and represent an alkyl group having a carbon number of 1 to 12, a hydrogen atom or a metal atom, g represents an integer of 1 to 3.

### [Constituent unit]

The modified PVA comprised in the dispersant of the present embodiment is a carbonyl group-containing PVA, which has a constituent unit represented by Chemical Formula (2) above. Specifically, the modified PVA has a structure in which unsaturated double bonds are introduced at random into the main chain from the starting point to which the carboxyl group is bound. Use of such a modified PVA containing reactive double bonds introduced into the molecule makes it more reliable to control the hydrophilic and hydrophobic regions of the vinyl chloride resin in the solution during suspension polymerization.

### [Saponification value]

The modified PVA comprised in the dispersant of the present embodiment has a saponification value of 75 mol % or more and less than 90 mol %. It is because, the vinyl chloride resin cannot have sufficiently high bulk specific density when the saponification value is less than 75 mol %, and the modified PVA has lower dispersing efficiency when the saponification value is 90 mol % or more. The saponification value of the modified PVA is desirably 76 mol % or more and less than 85 mol %. The saponification value, as specified herein, is a value determined by the method specified by JIS K 6726.

### [Absorbance]

The modified PVA comprised in the dispersant of the present embodiment has an absorbance at a wavelength of 280 nm, as determined as 0.2 mass % aqueous or mixed water and methanol solution in a quartz cell having an optical path length of 1 cm at 20°C, of 0.5 to 2.5. The absorption at a wavelength of 280 nm derives from the structure -(CH=CH)₂-. When the absorbance at a wavelength of 280 nm, which derives from the unsaturated double bonds, is less than 0.5, the modified PVA may have properties insufficient for the dispersant and increase the particle diameter of the vinyl chloride resin. Alternatively when the absorbance at a wavelength of 280 nm is more than 2.5, fine particles of the resin is generated, making the wastewater turbid and ultimately making it difficult to process the wastewater during suspension polymerization of vinyl chloride.

The modified PVA comprised in the dispersant of the present embodiment desirably has an absorbance at a wavelength of 325 nm, as determined as 0.2 mass % aqueous or mixed water and methanol solution in a quartz cell having an optical path length of 1 cm, of 0.02 to 0.20. The absorption at a wavelength of 325 nm derives from the structure -(CH=CH)₃-. It is possible to adjust the particle diameter of the vinyl chloride resin in a suitable range by controlling the absorbance in the range of 0.02 to 0.20.

### [Viscosity]

The modified PVA comprised in the dispersant of the present embodiment has an aqueous solution viscosity (viscosity of aqueous solution at a concentration of 4 mass % at 20°C), as determined by the method specified by JIS K 6726, of 4 mPa·s or more and less than 30 mPa·s. When the aqueous solution viscosity is less than 4 mPa·s, the aqueous solution readily scatters. Alternatively when the aqueous solution viscosity is 30 mPa·s or more, the modified PVA-based dispersant may be dissolved in water more slowly and deposited on the internal wall of the solubilization tank in a greater amount.

In the case of a modified PVA containing double bonds in the molecule, it may be crosslinked and insolubilized in the pretreatment stage of the measuring the polymerization degree by the method specified by JIS K 6726, prohibiting accurate determination of the polymerization degree. Thus in the present invention, the range of the aqueous solution viscosity specified by JIS K 6726 is used, replacing the polymerization degree.

### [Cloud point]

The modified PVA comprised in the dispersant of the present embodiment preferably has a cloud point, as determined as 4 mass % aqueous solution, of 50°C or higher. It is because, when the cloud point is lower than 50°C, the polymer may precipitate or crystallize during storage of the aqueous solution in solubilization tank.

### [Method for producing modified PVA]

The modified PVA described above is prepared by copolymerization of a monomer containing an ethylenic unsaturated double bond with a vinyl ester monomer and subsequent saponification of the copolymer.

Specifically, the monomers containing an ethylenic unsaturated double bond include, for example, dimethyl maleate, monomethyl maleate, diethyl maleate, monoethyl maleate, dibutyl maleate, di-2-ethylhexyl maleate, dimethyl fumarate, monomethyl fumarate, diethyl fumarate, monoethyl fumarate, dibutyl fumarate, maleic anhydride and the like.

The copolymerization amount of the monomer containing an ethylenic unsaturated double bond is not particularly limited, but preferably 0.1 mol % or more and less than 50 mol %, more preferably 0.1 mol % or more and less than 10 mol %, with respect to the total amount of the monomers, for preservation of the amount of unsaturated double bonds in the molecule and assurance of the water-solubility of the dispersant.

Alternatively, the monomer containing a vinyl ester unit include, but are not particularly limited to, vinyl formate, vinyl acetate, vinyl propionate, vinyl valerate, vinyl caprate, vinyl laurate, vinyl stearate, vinyl benzoate, vinyl pivalate and vinyl versatate and the like. In particular among them, use of vinyl acetate, which is superior in stability during polymerization, is desirable.

The modified PVA may be copolymerized, as needed, with other monomers copolymerizable with the monomers described above. Examples of the copolymerizable monomers include, but are not limited to, olefins such as ethylene, propylene, 1-butene, and isobutene; unsaturated acids such as acrylic acid, methacrylic acid, crotonic acid, phthalic acid, maleic acid and itaconic acid, or the salts thereof, or monoalkyl esters or dialkyl esters thereof with alkyl groups having a carbon number of 1 to 18; acrylamides such as acrylamide, N-alkyl and N,N-dialkyl acrylamides with alkyl groups having a carbon number of 1 to 18, diacetone acrylamide, 2-acrylamidopropanesulfonic acid and the salts thereof, acrylamidopropyldimethylamine and the salts or quaternary salts thereof; methacrylamides such as methacrylamide, N-alkyl and N,N-dialkyl methacrylamides with alkyl groups having a carbon number of 1 to 18, diacetone methacrylamide, 2-methacrylamidopropanesulfonic acid and the salts thereof, methacrylamidopropyldimethylamine and the salts or quaternary salts thereof; vinylethers such as alkyl vinylether, hydroxyalkyl vinylether, and alkoxyalkyl vinylether with an alkyl group having a carbon number of 1 to 18; N-vinylamides such as N-vinylpyrrolidone, N-vinylformamide, and N-vinylacetamide; vinyl cyanides such as acrylonitrile and methacrylonitrile; halogenated vinyls such as vinyl chloride, vinylidene chloride, vinyl fluoride, vinylidene fluoride, vinyl bromide, and vinylidene bromide; vinyl silanes such as trimethoxyvinylsilane; allyl compounds such as allyl acetate, allyl chloride, allyl alcohol, and dimethylallyl alcohol; vinyl silylated compounds such as vinyltrimethoxysilane, isopropenyl acetate and the like.

The amount of these other copolymerizable monomers is not particularly limited, but preferably 0.001 mol % or more and less than 20 mol % with respect to the total amount of the monomers.

The polymerization method of these monomers is also not particularly limited and any known polymerization method may be employed. Generally, the dispersant is prepared by solution polymerization, using an alcohol such as methanol, ethanol, or isopropyl alcohol as the solvent, but may be produced by bulk polymerization, emulsion polymerization, suspension polymerization or the like. When solution polymerization is employed, it may be continuous polymerization or batch polymerization. Further, the monomers may be supplied together or as divided and may be added continuously or intermittently.

The polymerization initiators used in the solution polymerization include, but are not limited to, known radical polymerization initiators including azo compounds such as azobisisobutylonitrile, azobis-2,4-dimethylvaleronitrile, and azobis (4-methoxy-2,4-dimethylvaleronitrile); peroxides such as acetyl peroxide, benzoyl peroxide, lauroyl peroxide, acetylcyclohexylsulfonyl peroxide and 2,4,4-trimethylpentyl-2-peroxyphenoxy acetate; percarbonate compounds such as diisopropyl peroxydicarbonate, di-2-ethylhexyl peroxydicarbonate, and diethoxyethyl peroxydicarbonate; perester compounds such as t-butyl peroxyneodecanoate, α-cumyl peroxyneodecanoate, and t-butyl peroxyneodecanoate; azobisdimethylvaleronitrile, azobismethoxyvaleronitrile and the like. The temperature of the polymerization reaction is not particularly limited, but may be adjusted normally in the range of about 30 to 90°C.

Alternatively, the saponification condition in production of the modified PVA is also not particularly limited, and the polymer obtained by the method described above may be saponified by any known method. Generally, the ester groups in the molecule are hydrolyzed in the presence of an alkali or acid catalyst. The concentration of the copolymer in the alcohol as a polymerization solvent then is not particularly limited, but desirably 10 to 80 mass %.

The alkali catalysts used then include, for example, alkali metal hydroxides and alcoholates such as sodium hydroxide, potassium hydroxide, sodium methylate, sodium ethylate, and potassium methylate. The acid catalysts include, for example, aqueous inorganic acid solutions such as of hydrochloric acid and sulfuric acid and organic acids such as p-toluenesulfonic acid. Use of sodium hydroxide is particularly desirable.

In addition, the temperature of the saponification reaction is also not particularly limited, but preferably in the range of 10 to 70°C, more preferably in the range of 30 to 40°C. The reaction time is not particularly limited, but desirably in the range of 30 minutes to 3 hours.

The modified PVA after saponification is washed, as needed, and dried under heat.

### [Other components]

The dispersant in the present embodiment can contain multiple PVAs different in saponification value in combination. Alternatively, the dispersant may contain a non-modified PVA having an average saponification value of 70 mol % or more and less than 98 mol % in addition to the modified PVA described above. It is thus possible to reduce the change in particle diameter of the vinyl chloride resin caused by the change in the amount of the dispersant added. Further, the dispersant may contain, as needed, hydroxypropylcellulose (HPMC) or a PVA having a saponification value of 30 mol % or more and less than 50 mol % as the secondary dispersant.

As described above in detail, the dispersant in the present embodiment comprises, as the principal component, a modified PVA containing a particular constituent unit and having an absorbance at a wavelength of 280 nm, which derives from unsaturated double bonds, of 0.5 to 2.5 and thus, gives a vinyl chloride resin having low fish eye-forming tendency and high bulk specific density.

Because the modified PVA has a low viscosity, as determined by the method specified by JIS K 6726, (viscosity of 4 mass % aqueous solution at 20°C) of 4 mPa·s or more and less than 30 mPa·s, it is dissolved more readily and to higher concentration than conventional dispersants and thus, it is also superior in processability.

### (Second embodiment)

Hereinafter, the vinyl chloride resin in the second embodiment of the present invention will be described. The vinyl chloride resin in the present embodiment is a vinyl chloride resin prepared by dispersing vinyl chloride monomer or a monomer mixture containing vinyl chloride monomer in water, using the dispersant in the first embodiment described above, and suspension-polymerizing the dispersion, which has a bulk specific density of 0.50 g/cc or more.

The vinyl chloride resin is produced by the method described below: First, the raw material monomer for the vinyl chloride resin in the present embodiment is vinyl chloride monomer alone or a mixture of vinyl chloride monomer and one or more other monomers copolymerizable therewith. In the case of mixture, the vinyl chloride monomer is desirably contained in an amount of 50 mass % or more. The other monomers copolymerizable with the vinyl chloride monomer is not limited in kind and examples thereof include vinyl acetate, methyl propionate, methyl (meth)acrylate, ethyl (meth)acrylate, (meth)acrylic acid, ethylene, propylene, maleic anhydride, acrylonitrile, styrene, vinylidene chloride and the like.

The vinyl chloride resin in the present embodiment can be prepared by suspension polymerization. The polymerization initiator used in the suspension polymerization is not particularly limited, and examples thereof include percarbonate compounds such as diisopropyl peroxydicarbonate, di-2-ethylhexyl peroxydicarbonate and diethoxyethyl peroxydicarbonate; peroxyester compounds such as t-butyl peroxyneodecanoate, t-hexyl peroxyneodecanoate, t-hexyl peroxypivalate, α-cumyl peroxyneodecanoate, t-hexyl neohexanoate, and 2,4,4-trimethylpentyl-2-peroxy-2-neodecanoate; azo compounds such as azobis(2,4-dimethylvaleronitrile) and azobisisobutylonitrile; and peroxide compounds such as lauryl peroxide, benzoyl peroxide, cumene hydroperoxide, and 2,4,4-trimethylpentyl-2-peroxyphenoxy acetate.

The polymerization initiator may be added before or after supply of water or the monomers. It may be added to the polymerization tank, after it is converted to an aqueous emulsion. The amount of the polymerization initiator added is preferably 0.02 to 0.2 parts by mass with respect to 100 parts by mass of the vinyl chloride monomer or the monomer mixture containing the same.

Alternatively, the dispersant is preferably added in such an amount that the modified PVA is contained therein in an amount of 0.03 to 0.10 mass % with respect to the total amount of vinyl chloride monomer contained in the raw materials. It is possible in this way to produce a vinyl chloride resin having suitable particle diameter. When the content of the modified PVA is less than 0.03 mass %, the dispersing efficiency vinyl chloride monomer in water may decline. Alternatively when the content of the modified PVA is more than 0.10 mass %, the vinyl chloride resin obtained may have excessively small particle diameter, making the vinyl chloride resin contaminate wastewater and thus making it difficult to process the wastewater.

Various conditions for production of the vinyl chloride resin in the present embodiment can be set from known technology. For example, polymerization conditions, including the methods of feeding respective raw material compounds, the ratio of the monomer to water fed, polymerization temperature, polymerization conversion rate and stirring rate, are not particularly limited. In addition, antifoaming agents, polymerization degree-regulating agents, chain-transfer agents, antioxidants, antistatic agents and others may be used, as needed.

Because the vinyl chloride resin in the present embodiment is prepared by suspension polymerization using the dispersant in the first embodiment described above, it is superior in processability during polymerization and has low fish eye-forming tendency. As the vinyl chloride resin has high bulk specific density, it can be stored and transported efficiently and can improve the processability at processing sites. Thus, it would be effective in improving the productivity and the quality of the products in general applications of vinyl chloride resins, such as pipes, joints, cables, and window frames.

### Examples

Hereinafter, the advantageous effects of the present invention will be described specifically with reference to Examples and Comparative Examples of the present invention. In the following Examples, modified polyvinyl alcohols A to F falling within the scope of the present invention and also modified polyvinyl alcohols G to L not falling within the scope of the present invention were prepared. Subsequently, suspension polymerization for production of vinyl chloride resin was carried by using each of the modified polyvinyl alcohols of these Examples and Comparative Examples as the dispersant and physical properties and others of the vinyl chloride resins obtained were evaluated. Unless specified otherwise, "part" and "%" are values based on mass.

### [Examples 1 to 6]

### <Preparation of modified polyvinyl alcohols A to C>

First, 1670 g of vinyl acetate, 1160 g of methanol, 2.5 g of dimethyl maleate, and 2.0 g of azobisisobutylonitrile were placed in a polymerization tank and, after nitrogen substitution, the mixture was heated to the boiling point. After the reaction solution is heated to a temperature of 60°C or higher, a mixture of 520 g of vinyl acetate, 270 g of methanol, and 23 g of dimethyl maleate was added dropwise continuously from the top of the polymerization tank over 5 hours. The polymerization was terminated one hour after completion of the dropwise addition, when the polymerization rate reached 65%.

Then, unreacted vinyl acetate was removed by a common method, and the polymer obtained was saponified using sodium hydroxide, as the reaction temperature, reaction time and sodium hydroxide amount were regulated by common methods. After progress of the saponification reaction, the polymer was dried with hot air at 90°C for 90 minutes, to give modified polyvinyl alcohols A to C having a constituent unit represented by Chemical Formula (2) above but being different in saponification value.

### <Preparation of modified polyvinyl alcohols D to F>

First, 1640 g of vinyl acetate, 500 g of methanol, 4.0 g of dimethyl maleate, and 2.0 g of azobisisobutylonitrile were placed in a polymerization tank and, after nitrogen substitution, the mixture was heated to the boiling point. After the reaction solution is heated to a temperature of 60°C or higher, a mixture of 510 g of vinyl acetate, 230 g of methanol, and 33 g of dimethyl maleate was added dropwise continuously from the top of the polymerization tank over 5 hours. The polymerization was terminated one hour after completion of the dropwise addition, when the polymerization rate reached 55%.

Then, unreacted vinyl acetate was removed by a common method, and the polymer obtained was saponified using sodium hydroxide, as the reaction temperature, reaction time, and sodium hydroxide amount were regulated by common methods. After progress of the saponification reaction, the polymer was dried with hot air at 90°C for 90 minutes, to give modified polyvinyl alcohols D to F having a constituent unit represented by the Chemical Formula (2) but being different in saponification value.

### <Characterization of PVAs>

Subsequently, the aqueous solution viscosity, the saponification value, the absorbance at a wavelength of 280 nm, and the cloud point of each of the modified polyvinyl alcohols A to F obtained were evaluated respectively by the following methods.

a) Aqueous solution viscosity: determined according to JIS K 6726
b) Saponification degree: determined according to JIS K 6726
c) Absorbance: an aqueous solution of a modified polyvinyl alcohol at a concentration of 0.2 mass % was placed in an quartz cell having an optical path length of 10 mm; and the ultraviolet spectrum of the solution was determined by using an ultraviolet-visible spectrophotometer UV-1650PC (manufactured by Shimadzu Corp.) at a temperature of 20°C and the absorbance at a wavelength of 280 nm was determined.
d) Cloud point: an aqueous solution of a modified polyvinyl alcohol at a concentration of 4.0 % was placed in a glass test tube; a thermometer was inserted therein; and the test tube was immersed in a water bath and heated gradually to 90°C. The temperature when the aqueous solution became turbid was determined as the cloud point.

### <Evaluation of solubilization rate>

270 g of pure water was placed in a beaker having a capacity of 500mL, and 30 g of a modified polyvinyl alcohol was added thereto, as the solution was agitated with a magnet stirrer at room temperature (25°C) for 1 hour. After 1 hour, the solid matter concentration in the water phase was determined and the solubility calculated.

### <Evaluation of deposition on stainless steel>

When a modified polyvinyl alcohol is dissolved in water in a solubilization tank, the modified polyvinyl alcohol often form layers of films that are tightly deposited on the tank internal wall, and making tank cleaning difficult. Thus, ease of the deposition on a stainless steel of each of the modified polyvinyl alcohols A to F was evaluated.

Specifically, the surface of a stainless steel test piece having a width of 25 mm, a length of 100 mm, and a thickness of 1 mm was washed first with a detergent for tableware and then immersed in acetone for cleaning. Then, a line was marked on the test piece with a black permanent marker at the position 2 cm inside from the terminal of the test piece to indicate the margin needed for hanging the test piece. The test piece was then immersed into an aqueous solution of a modified polyvinyl alcohol at a concentration of 4%, withdrawn in the vertical direction and dried in a temperature-controlled room at a temperature of 20°C and a humidity of 50% for 2 hours. After the cycle of immersion and drying was repeated 5 times, the mass of the test piece was determined and the amount of the modified polyvinyl alcohol deposited on the test piece was determined.

### <Suspension polymerization of vinyl chloride monomer>

First, 12000 g of water and 2.6 g of a modified polyvinyl alcohol were placed and dissolved in a reactor having a capacity of 30 liter equipped with a paddle agitating blades having a blade width of 37.5 mm. Then, 0.5 g of cumyl peroxyneodecanoate and 2.3 g of t-butyl peroxyneodecanoate were added thereto as polymerization initiators. After the tank was substituted with nitrogen, 5000 g of vinyl chloride monomer was added thereto, and the mixture was allowed to react, as it is agitated at a rotating speed of 650 rpm and at a temperature of 57.5°C for 4 hours. When the internal pressure became 0.78 MPa or less, the polymerization reaction was terminated, and the resin slurry was withdrawn from the reactor, dehydrated and dried to give a resin powder.

### <Characterization of vinyl chloride resins>

The average particle diameter, the bulk specific density and the fish eye-forming tendency of the vinyl chloride resin obtained were evaluated. Measurement of the average diameter was carried out according to JIS K6721, using sieves of 60 mesh (opening: 250 µm), 80 mesh (opening: 180 µm), 100 mesh (opening: 150 µm), 150 mesh (opening: 106 µm) and 200 mesh (opening: 75 µm), and the particle diameter at a cumulative frequency of 50% was used as the average particle diameter. The bulk specific density was determined according to JIS K6720-2.

In addition, the fish eye-forming tendency was determined by blending and kneading 100 parts of a vinyl chloride resin with 0.8 part of barium stearate, 0.4 part of titanium dioxide, 0.05 part of carbon black, 50 parts of dioctyl phthalate, and 2 parts of a tin-based stabilizer with a 8-inch roll having a surface temperature of 150°C for 5 minutes, preparing a sheet having a thickness of 0.2 mm with the blend, and counting the number of the fish eyes observed in an area of 100 cm² thereon.

### [Comparative Examples 1 to 3]

### <Preparation of modified polyvinyl alcohol G>

First, 3000 g of vinyl acetate, 616.3 g of methanol, 40.8 g of dimethyl maleate, and 2.5 g of azobisisobutylonitrile were placed in a polymerization tank and, after nitrogen substitution, the mixture was heated to the boiling point. When the polymerization rate reached 65%, the polymerization was terminated. Unreacted vinyl acetate was then removed by a common method, and the polymer obtained was saponified using sodium hydroxide by a common method. The polymer was then dried with hot air at 90°C for 90 minutes, to give a modified polyvinyl alcohol G.

### <Preparation of modified polyvinyl alcohol H>

First, 3000 g of vinyl acetate, 76.7 g of methanol, 50.1 g of dimethyl maleate, and 2.5 g of azobisisobutylonitrile were placed in a polymerization tank and, after nitrogen substitution, the mixture was heated to the boiling point. When the polymerization rate reached 46%, the polymerization was terminated. Unreacted vinyl acetate was then removed by a common method, and the polymer obtained was saponified using sodium hydroxide by a common method. The polymer was then dried with hot air at 90°C for 90 minutes, to give a modified polyvinyl alcohol H.

### <Preparation of modified polyvinyl alcohol I>

First, 2289 g of vinyl acetate, 71.0 g of methanol, 5.0 g of dimethyl maleate, and 2.5 g of azobisisobutylonitrile were placed in a polymerization tank and, after nitrogen substitution, the mixture was heated to the boiling point. After the reaction solution is heated to a temperature of 60°C or higher, a mixture of 711.0 g of vinyl acetate, 15.0 g of methanol, and 45.1 g of dimethyl maleate was added dropwise continuously from the top of the polymerization tank over 4 hours. The polymerization was terminated one hour after completion of the dropwise addition, when the polymerization rate reached 44%.

Unreacted vinyl acetate was then removed by a common method, and the polymer obtained was saponified using sodium hydroxide, as the reaction temperature, reaction time, and sodium hydroxide amount were regulated by common methods. After progress of the saponification reaction, the polymer was dried with hot air at 90°C for 90 minutes, to give a modified polyvinyl alcohol I.

The solubilization rate and the deposition on stainless steel of each of the modified polyvinyl alcohols G to I prepared by the methods described above were evaluated by procedures similar to those used in Examples 1 to 6, and suspension polymerization of vinyl chloride monomer was carried out using each of the modified polyvinyl alcohols G to 1.

### [Comparative Example 4]

The solubilization rate and the deposition on stainless steel were evaluated and the suspension polymerization of vinyl chloride monomer was carried out in operation procedures similar to Example 1, except that the modified polyvinyl alcohol A of Example 1 was replaced with a commercially available modified polyvinyl alcohol J (a modified polyvinyl alcohol having double bonds only at the ends of the molecule, viscosity of the aqueous solution at a concentration of 4 mass % at 20°C: 5.5 mPa·s, average saponification value: 70.2 mol %, absorbance at a wavelength of 280 nm: 1.3.)

### [Comparative Example 5]

The solubilization rate and the deposition on stainless steel were evaluated and the suspension polymerization of vinyl chloride monomer was carried out in operation procedures similar to Example 1, except that the modified polyvinyl alcohol A of Example 1 was replaced with a commercially available modified polyvinyl alcohol K (a modified polyvinyl alcohol having double bonds in the molecule, viscosity of the aqueous solution at a concentration of 4 mass % at 20°C: 10.8 mPa·s, average saponification value: 72.0 mol %, absorbance at a wavelength of 280 nm: 1.1.)

### [Comparative Example 6]

The solubilization rate and the deposition on stainless steel were evaluated and the suspension polymerization of vinyl chloride monomer was carried out in operation procedures similar to Example 1, except that the modified polyvinyl alcohol A of Example 1 was replaced with a commercially available modified polyvinyl alcohol L (a polyvinyl alcohol having double bonds only at the ends of the molecule, viscosity of the aqueous solution at a concentration of 4 mass % at 20°C: 6.2 mPa·s, average saponification value: 72.0 mol %, absorbance at a wavelength of 280 nm: 0.8).

The results above are summarized in the following Tables 1 and 2.

**[Table 1]**

| | | | Example | | | | | |
|---|---|---|---|---|---|---|---|---|
| | | | 1 | 2 | 3 | 4 | 5 | 6 |
| Characterization of PVA | | | | | | | | |
| | Dispersant | | A | B | C | D | E | F |
| | Aqueous solution viscosity | (mPa·s) | 10.2 | 6.0 | 12.3 | 27.1 | 16.5 | 22.8 |
| | Saponification value | (mol %) | 76.3 | 80.4 | 88.0 | 77.2 | 81.0 | 87.8 |
| | Cloud point | (°C) | 85 | 90 or more | 90 or more | 88 | 90 or more | 90 or more |
| | Absorbance | (ABS) | 0.8 | 1.2 | 2.1 | 0.7 | 1.0 | 2.0 |

| Evaluation of processability during solubilization | | | | | | | | |
|---|---|---|---|---|---|---|---|---|
| | Solubility | (%) | 100 | 100 | 100 | 100 | 100 | 100 |
| | Deposition on stainless steel | (g) | 0.010 | 0.008 | 0.010 | 0.012 | 0.010 | 0.013 |

| Composition in vinyl chloride polymerization | | | | | | | | |
|---|---|---|---|---|---|---|---|---|
| | Water | (g) | 12000 | 12000 | 12000 | 12000 | 12000 | 12000 |
| | Vinyl chloride monomer | (g) | 5000 | 5000 | 5000 | 5000 | 5000 | 5000 |
| | Dispersant 1 | (g) | 2.6 | 2.6 | 2.6 | 2.6 | 2.6 | 2.6 |
| | (addition amount) | (mass %) | 0.05 | 0.05 | 0.05 | 0.05 | 0.05 | 0.05 |

| Analytical results of vinyl chloride resin | | | | | | | | |
|---|---|---|---|---|---|---|---|---|
| | Bulk specific density | (g/ml) | 0.59 | 0.59 | 0.58 | 0.58 | 0.59 | 0.59 |
| | Average diameter | (µm) | 130 | 128 | 125 | 128 | 129 | 127 |
| | Fish eye | (count) | 1 | 0 | 1 | 1 | 1 | 0 |

**[Table 2]**

| | | | Comparative Example | | | | | |
|---|---|---|---|---|---|---|---|---|
| | | | 1 | 2 | 3 | 4 | 5 | 6 |
| Characterization of PVA | | | | | | | | |
| | Dispersant | | G | H | I | J | K | L |
| | Aqueous solution viscosity | (mPa·s) | 55.0 | 305.0 | 286.0 | 5.5 | 10.8 | 6.2 |
| | Saponification value | (mol %) | 77.0 | 80.0 | 86.0 | 70.2 | 72.0 | 72.0 |
| | Cloud point | (°C) | 85 | 90 or more | 90 or more | 34 | 55 | 35 |
| | Absorbance | (ABS) | 1.1 | 1.9 | 1.6 | 1.3 | 1.0 | 0.7 |

| Evaluation of processability during solubilization | | | | | | | | |
|---|---|---|---|---|---|---|---|---|
| | Solubility | (%) | 95 | 88 | 90 | 98 | 97 | 97 |
| | Deposition on stainless steel | (g) | 0.030 | 0.033 | 0.034 | 0.023 | 0.020 | 0.025 |

| Composition in vinyl chloride polymerization | | | | | | | | |
|---|---|---|---|---|---|---|---|---|
| | Water | (g) | 12000 | 12000 | 12000 | 12000 | 12000 | 12000 |
| | Vinyl chloride monomer | (g) | 5000 | 5000 | 5000 | 5000 | 5000 | 5000 |
| | Dispersant 1 | (g) | 3.0 | 3.0 | 3.0 | 5.0 | 3.3 | 8.0 |
| | (addition amount) | (mass %) | 0.06 | 0.06 | 0.06 | 0.10 | 0.07 | 0.16 |

| Analytical results of vinyl chloride resin | | | | | | | | |
|---|---|---|---|---|---|---|---|---|
| | Bulk specific density | (g/ml) | 0.55 | 0.59 | 0.57 | 0.44 | 0.46 | 0.40 |
| | Average diameter | (µm) | 137 | 132 | 140 | 148 | 133 | 128 |
| | Fish eye | (count) | 5 | 3 | 3 | 5 | 6 | 5 |

As shown in Tables 1 and 2, the modified polyvinyl alcohols of Examples 1 to 6 showed smaller deposition on stainless steel and higher solubilization rate than the modified polyvinyl alcohols of Comparative Examples 1 to 6. It demonstrates that the modified polyvinyl alcohol according to the present invention is superior in processability during solubilization in production of vinyl chloride resins. In addition, the vinyl chloride resins prepared by using the modified polyvinyl alcohols of Examples 1 to 6 had higher bulk specific density and lower fish eye-forming tendency than vinyl chloride resin prepared by using conventional modified polyvinyl alcohols.

## Claims

1. A dispersant for suspension polymerization, comprising a modified polyvinyl alcohol containing a constituent unit represented by the following Chemical Formula (A) and having a saponification value of 75 mol % or more and less than 90 mol %, an absorbance at a wavelength of 280 nm, as determined as 0.2 mass % aqueous or mixed water and methanol solution, of 0.5 to 2.5, and a viscosity, as determined by the method specified by JIS K 6726, of 4 mPa·s or more and less than 30 mPa·s, 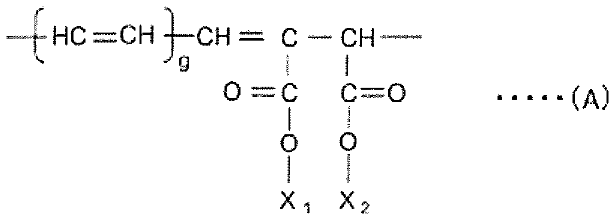 (wherein, X₁ and X₂ may be the same as or different from each other and represent an alkyl group having a carbon number of 1 to 12, a hydrogen atom or a metal atom. g represents an integer of 0 to 3.)

2. The dispersant for suspension polymerization according to Claim 1, having an absorbance at a wavelength of 325 nm, as determined as 0.2 mass % aqueous or mixed water and methanol solution at 20°C, of 0.02 to 0.20.

3. The dispersant for suspension polymerization according to Claim 1 or 2, having a cloud point, as determined as 4 mass % aqueous solution, of 50°C or higher.

4. A vinyl chloride resin having a bulk specific density of 0.05 g/cc or more, produced by dispersing vinyl chloride monomer or a monomer mixture containing vinyl chloride monomer in water, using the dispersant for suspension polymerization according to any one of Claims 1 to 3, and suspension-polymerizing the dispersion.

5. A method for producing a vinyl chloride resin by dispersing vinyl chloride monomer or a monomer mixture containing vinyl chloride monomer in water and suspension-polymerizing the dispersion, wherein a dispersant for suspension polymerization, comprising a modified polyvinyl alcohol containing a constituent unit represented by the following Chemical Formula (A) and having a saponification value of 75 mol % or more and less than 90 mol %, an absorbance at a wavelength of 280 nm, as determined as 0.2 mass % aqueous or mixed water and methanol solution at 20°C, of 0.5 to 2.5, and a viscosity, as determined by the method specified by JIS K 6726, of 4 mPa·s or more and less than 30 mPa·s is used, 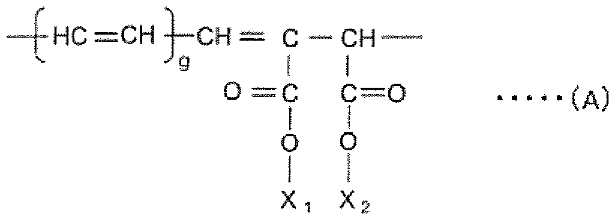 (wherein, X₁ and X₂ may be the same as or different from each other and represent an alkyl group having a carbon number of 1 to 12, a hydrogen atom or a metal atom. g represents an integer of 0 to 3.)

6. The method for producing a vinyl chloride resin according to Claim 5, wherein the dispersant for polymerization is added in such an amount that the amount of the modified polyvinyl alcohol is 0.03 to 0.10 mass % of the total amount of vinyl chloride monomer.
